# EUROPEAN PATENT APPLICATION

(11) **EP 2 096 571 A1**
(43) Date of publication of application: **02.09.2009**
(21) Application number: 09150207.0
(22) Date of filing: 08.01.2009
(51) Int. Cl.: G06F 21/00

(54) **Personal identification system and method thereof**

(30) Priority: 28.02.2008 JP 2008048588
(71) Applicant: Fujitsu Limited, Kawasaki-shi, Kanagawa 211-8588 (JP)
(72) Inventor: Aoki, Takahiro, Kawasaki-shi, Kanagawa 211-8588 (JP); Hama, Soichi, Kawasaki-shi, Kanagawa 211-8588 (JP); Fukuda, Mitsuaki, Kawasaki-shi, Kanagawa 211-8588 (JP)
(74) Representative: Stebbing, Timothy Charles

(57) **Abstract**

A personal identification system (10) includes a user database (30) and a knowledge database (40). The user database (30) stores personal data of users. The knowledge database stores (40) knowledge data relating to the personal data stored in the user database. The personal identification system (10) generates a query on the basis of the knowledge data stored in the knowledge database (40), issues the generated query, and screens candidates for identification in accordance with an answer to the query, prior to an identification process such as biometric matching using the user database (30).

## Description

The present invention relates to a personal identification system for making a query to a user to screen candidates for identification in accordance with an answer to the query.

Recently, there is an increase in cases of using biometric identification as identification means in an entry control system, a library book checkout system, etc. (refer to Japanese Laid-open Patent Publication No. 2007-52720, for example). Well-known biometric identification includes one-to-one identification and one-to-N identification. In the one-to-one identification, a subject enters an ID (identification) to specify a candidate and then gets identified. The one-to-N identification requires no ID, and data of a subject is matched with all the registered biometric data.

Matching with all the registered biometric data in the one-to-N identification may require enormous processing time. Further, in general, the false acceptance rate, that is, the percentage of identifying an unauthorized person as an authorized person, increases as the number of registered persons increases. Therefore, candidates for identification are usually screened before the biometric identification.

In entry control systems, for example, an employee card is read or employee ID is entered to specify a candidate in most cases, and then biometric identification is performed. In such systems, however, the users have to carry the card always or keep the ID number in their mind.

As a biometric identification system which requires no card or no ID, Japanese Laid-open Patent Publication No. 11-328421 discusses a biometric identification system which requires a user to enter a pre-registered favorite "sign" when using an ATM (automated teller machine), screens candidates for identification on the basis of the "sign", and then performs biometric identification.

The technology discussed in Japanese Laid-open Patent Publication No. 11-328421 requires the user to memorize the "sign" which is entered to screen candidates for the biometric identification. This becomes a burden for the user.

Another biometric identification system which requires no card or no ID may allow a user to enter registered personal data, such as a name, telephone number, and birth date directly, screen candidates for identification in accordance with a database, and then perform biometric identification.

In such a system, direct entry of personal data such as a name, birth date, and telephone number, in the public place has a risk that the third party peeps at the data and a problem that the user has feelings of psychological resistance toward entering the data. Furthermore, the direct entry of the personal data is troublesome and there is a problem of a burden for the user.

Accordingly, the present invention is devised in view of the problems of the conventional art, and embodiments of the present invention may reduce the burden of the user and further decrease the psychological resistance of the user by suppressing the risk of peeping at the personal data by the third party.

According to an aspect of the present invention, provided is a personal identification system for identifying a user. The personal identification system includes a personal data storage, a knowledge data storage, a query generator, an interrogator, and a candidate screener. The personal data storage stores personal data of users. The knowledge data storage stores knowledge data related to the personal data stored in the personal data storage. The query generator generates a query on the basis of the knowledge data stored in the knowledge data storage. The interrogator issues the query generated by the query generator to the user and obtains an answer to the query from the user. The candidate screener screens candidates for identification in accordance with the answer.

In other words, the number of potential candidates for identification (e.g., biometric matching by use of biometric data stored in the personal data storage) is reduced by screening so as to reduce the processing time for identification.

The personal identification system may further include an identifier which performs an identification process of identifying the user when a quantity of the candidates is less than a predefined quantity after the candidate screener has screened the candidates.

The personal identification system may further include a screening status notifier and a start instruction acceptor. The screening status notifier notifies the user of a status of screening candidates. The start instruction acceptor accepts an instruction from the user to start the identification process. In such a configuration, the identifier starts the identification process upon the start instruction acceptor accepting the instruction.

The personal identification system may further include a personal data acceptor which accepts personal data entered by the user. In such a configuration, the candidate screener also screens the candidates for identification in accordance with the personal data entered by the user.

The personal identification system may further include a skip instruction acceptor which accepts an instruction from the user to skip the query. In such a configuration, the query issuer issues another query generated by the query generator to the user upon the skip instruction acceptor accepting the instruction.

Reference is made, by way of example only, to the accompanying drawings in which:
Fig. 1 is a block diagram illustrating a system configuration of a personal identification system according to a first embodiment of the present invention;
Fig. 2 is a diagram illustrating an example of user database according to a first embodiment of the present invention;
Fig. 3 is a diagram illustrating an example of knowledge database according to a first embodiment of the present invention;
Fig. 4 is a diagram illustrating an example of display screen for data entry according to a first embodiment of the present invention;
Fig. 5 is a diagram illustrating an example of display screen for status notification according to a first embodiment of the present invention;
Fig. 6 is a diagram illustrating a general idea of a process of a query generator of a personal identification system according to a first embodiment of the present invention;
Fig. 7 is a diagram illustrating a flowchart of a screening process performed in a personal identification system according to a first embodiment of the present invention;
Fig. 8 is a block diagram illustrating a system configuration of a personal identification system according to a second embodiment of the present invention;
Fig. 9 is a diagram illustrating an example of an employee database according to a second embodiment of the present invention;
Fig. 10 is a diagram illustrating an example of a knowledge database according to a second embodiment of the present invention;
Fig. 11 is a block diagram illustrating a system configuration of a personal identification system according to a third embodiment of the present invention;
Fig. 12 is a diagram illustrating an example of a knowledge database according to a third embodiment of the present invention;
Fig. 13 is a diagram illustrating an example of display screen for data confirmation according to a third embodiment of the present invention;
Fig. 14 is a diagram illustrating examples of a query generated in association with a birth date according to an embodiment of the present invention;
Fig. 15 is a diagram illustrating examples of a query generated in association with a name according to an embodiment of the present invention;
Fig. 16 is a diagram illustrating examples of a query generated in association with an affiliation according to an embodiment of the present invention;
Fig. 17 is a diagram illustrating examples of a query generated in association with a school according to an embodiment of the present invention;
Fig. 18 is a diagram illustrating examples of a query generated in association with an address according to an embodiment of the present invention;
Fig. 19 is a diagram illustrating an example of a query generated in association with a mail address according to an embodiment of the present invention; and
Fig. 20 is a diagram illustrating a computer that executes a query generation program for personal identification according to an embodiment of the present invention.

Hereinafter, a specific discussion will be given of a personal identification system according to embodiments of the present invention with reference to the drawings.

### [First Embodiment]

A discussion will be given of a system configuration and a process flow of a personal identification system according to a first embodiment of the present invention. Then, an advantage according to the first embodiment will be finally discussed. In the first embodiment, personal identification is applied, as an example of screening candidates for identification, to a library book checkout system.

### [System configuration of personal identification system]

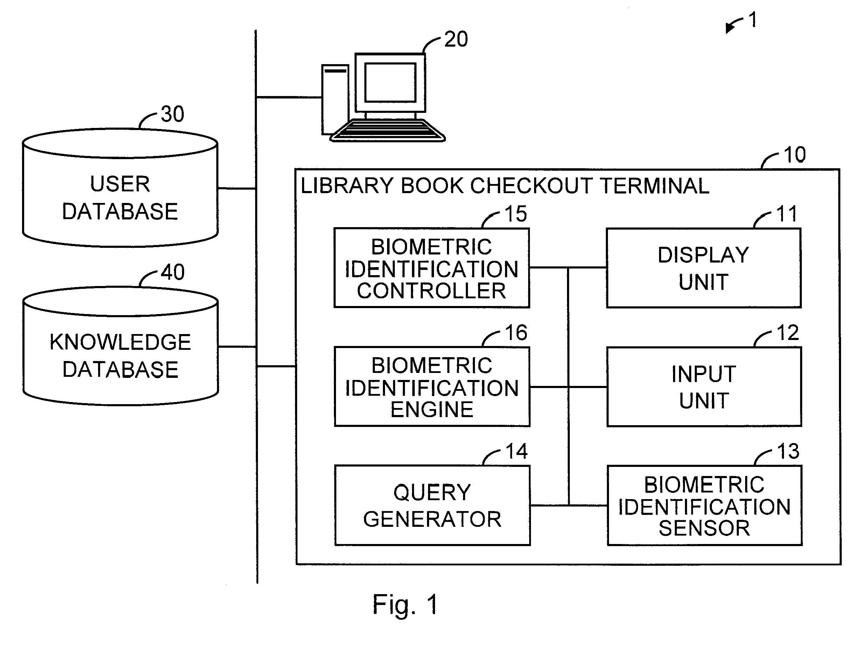

Fig. 1 is a block diagram illustrating a system configuration of a personal identification system according to a first embodiment of the present invention. A discussion will be given of a personal identification system 1 with reference to Fig. 1. As shown in Fig. 1, the personal identification system 1 includes a library book checkout terminal 10, a system management terminal 20, a user database 30, and a knowledge database 40. Hereinafter, process of these components will be discussed.

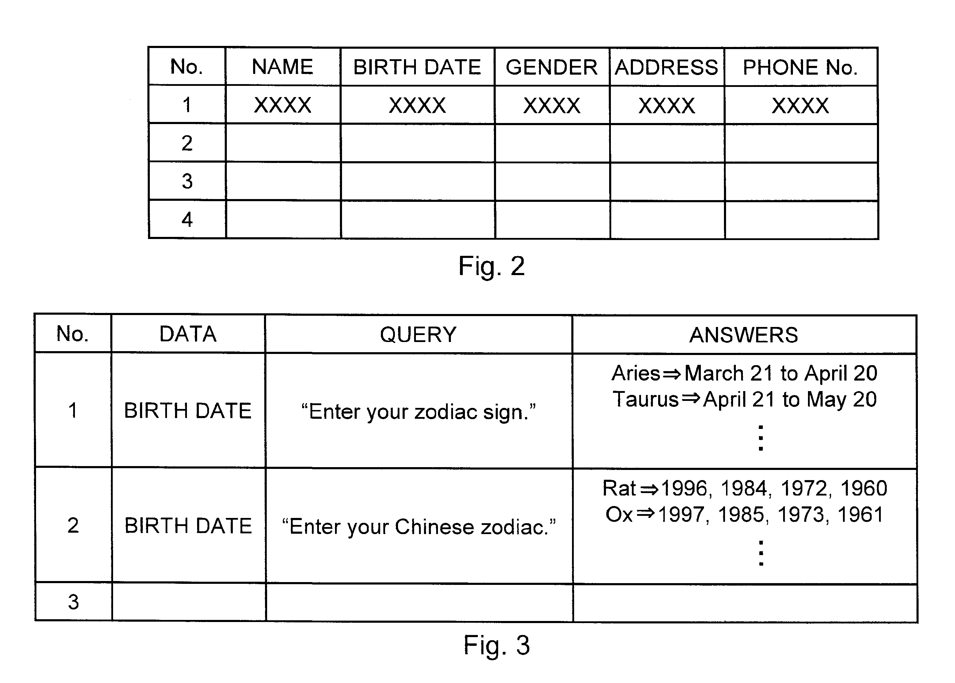

The user database 30 stores data relating to users. Specifically, the user database 30 stores personal data and biometric data. Here, the personal data stored in the user database 30 is data described on an application form by the user when the user applied for library book checkout service. Fig. 2 is a diagram illustrating an example of user database according to a first embodiment of the present invention. As shown in Fig. 2, for example, the personal data includes name, birth date, gender, address, and telephone number.

The biometric data stored in the user database 30 is used as registered data in personal identification. The biometric data corresponds, for example, to pattern data of a fingerprint of the user. On checkout of a library book by the user, registered biometric data is matched with currently entered biometric data, thereby performing identification.

The knowledge database 40 stores knowledge data relating to the personal data stored in the user database 30. Specifically, the knowledge database 40 stores knowledge data referenced by a query generator 14, which will be discussed later, to generate a query. Fig. 3 is a diagram illustrating an example of knowledge database according to a first embodiment of the present invention. As shown in Fig. 3, for example, the knowledge database 40 includes data for calculating the Chinese zodiac and the zodiac sign from the birth date.

The generated query sentence may be stored in advance as program data in the query generator 14. Alternatively, the query sentence may be stored in the knowledge database 40 as shown in Fig. 3.

Further, the zodiac sign is determined by the birth date. However, at the date near the border of zodiac signs, the zodiac sign is not necessarily unique. Therefore, different zodiac signs may share the same date in the knowledge database.

The system management terminal 20 performs various settings of the system. The system management terminal 20, for example, sets acceptable processing time for the biometric identification and acceptable false acceptance rate. Further, the system management terminal 20 updates the knowledge database and performs registration of user data.

The library book checkout terminal 10 has an internal memory for storing programs prescribing various procedures and predefined data to execute various processes therewith. In particular, closely relating to the present invention, the library book checkout terminal 10 includes a display unit 11, an input unit 12, a biometric identification sensor 13, a query generator 14, a biometric identification controller 15, and a biometric identification engine 16.

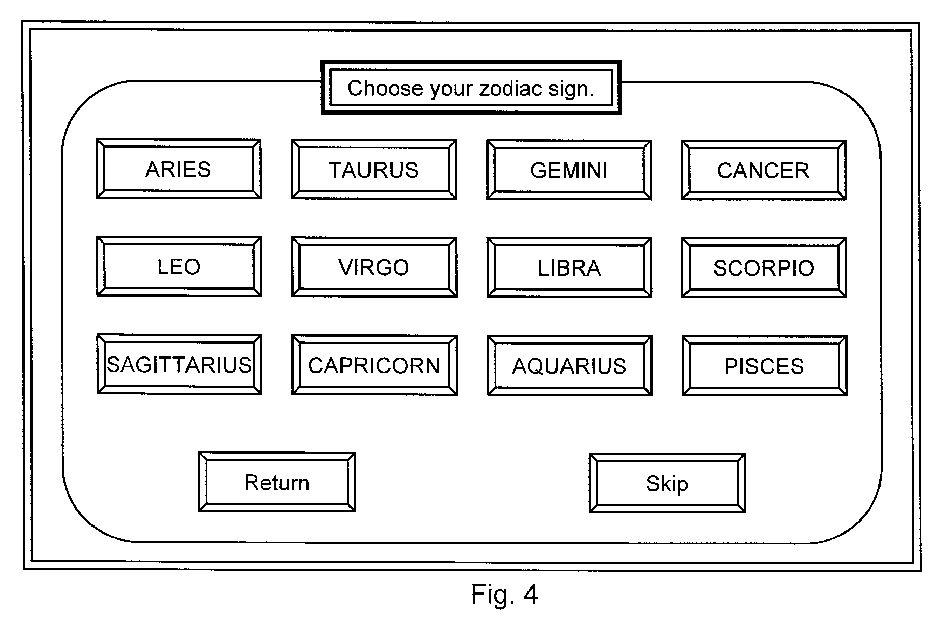

The display unit 11 displays various data (e.g., query and screening status) to the user, and includes a monitor (or display device, a touch panel) and a loudspeaker. Fig. 4 is a diagram illustrating an example of display screen for data entry according to a first embodiment of the present invention. As shown in Fig. 4, for example, the display unit 11 displays a query (query for the zodiac sign of the user in the example shown in Fig. 4) generated by the query generator 14, which will be discussed later.

When allowing the user to select an answer, the display unit 11 may display at random dummy answers that do not originally exist, as alternatives of the answer. With the dummy answers, even when a third party peeps at the data, the possibility for memorizing the data may be advantageously suppressed. Selecting a dummy alternative suggests that a third party other than the legitimate person may be trying illegal access. In such a situation, a warning may be displayed on the system management terminal 20.

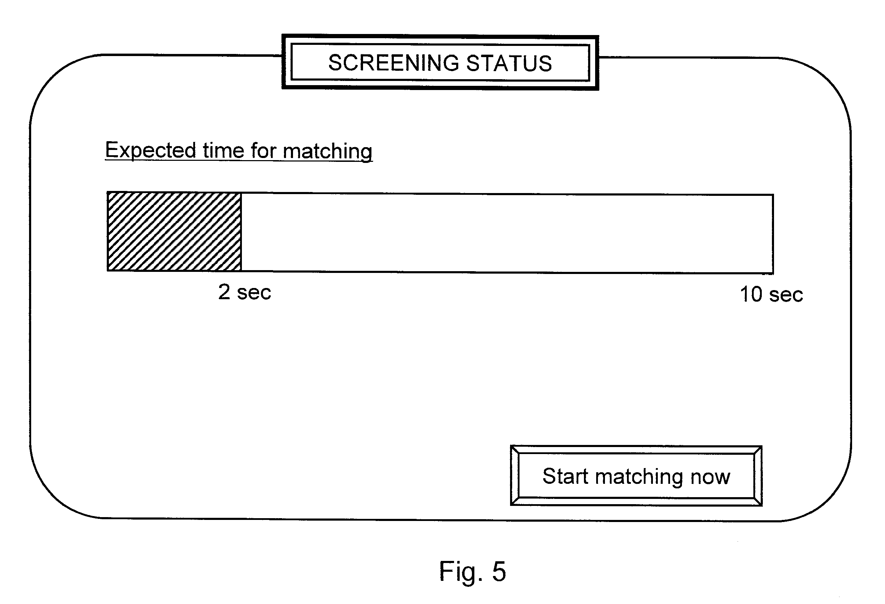

Fig. 5 is a diagram illustrating an example of display screen for status notification according to a first embodiment of the present invention. As shown in Fig. 5, the display unit 11 sequentially displays the screening status on the display screen to allow the user to execute the matching process at any time.

Some users may feel that waiting for matching is better than performing the troublesome entry operations. On such occasions, the user may be allowed to execute a matching process at any time (without first screening to reduce the number of possible matching candidates). For this end, the display unit 11 displays the current screening status on the display screen. For example, the display unit 11 displays data indicating, for example, "Now, matching will take 2 sec", and a button for starting the matching process is provided so that the user may press it at any time he/she feels OK.

The input unit 12 receives an answer to the query from the user, and includes a keyboard, a mouse, and a track ball. Further, a touch panel may be used combined with the display unit 11.

Specifically, the answer to the query may be directly entered from the keyboard. Alternatively, as shown in Fig. 4, the input unit 12 may provide an interface that allows the user to select one of alternatives displayed on the display unit 11 with a mouse. Further alternatively, the input unit 12 may provide an interface that allows the user to directly select one of alternatives displayed on the display unit 11 combined with a touch panel.

Further, as shown in Fig. 4, an alternative of "skip" (wait for the next query) may be provided. This option is provided because the user may actually forget the answer for the query. In this case, since the candidates for identification may not be sufficiently screened, the identification process may take a long time. However, the "skip" allows the user to make comfortable use of the system.

On user's demand, the system may allow the user to enter personal data directly. Some users may not hesitate to enter personal data directly but feel it easier than waiting for biometric matching. On such occasions, direct entry may be permitted.

Further, the allowance of direct entry may be limited for individuals. Adults, for example, may be permitted free selection because they are assumed to have sufficient judgment. On the other hand, there are some cases where children may be preferably prevented from the direct entry as much as possible in the interest of safety. In such a case, a direct entry button may be set invalid for a child not more than 10 years old in accordance with the registered birth date. The setting may be designed to be arbitrarily updated from a system management terminal 20.

The biometric identification sensor 13 receives the biometric data used for biometric identification. The biometric identification sensor 13 includes various sensors for biometric identification, such as a fingerprint identification, face identification, vein identification, iris identification, retina identification, and voice identification.

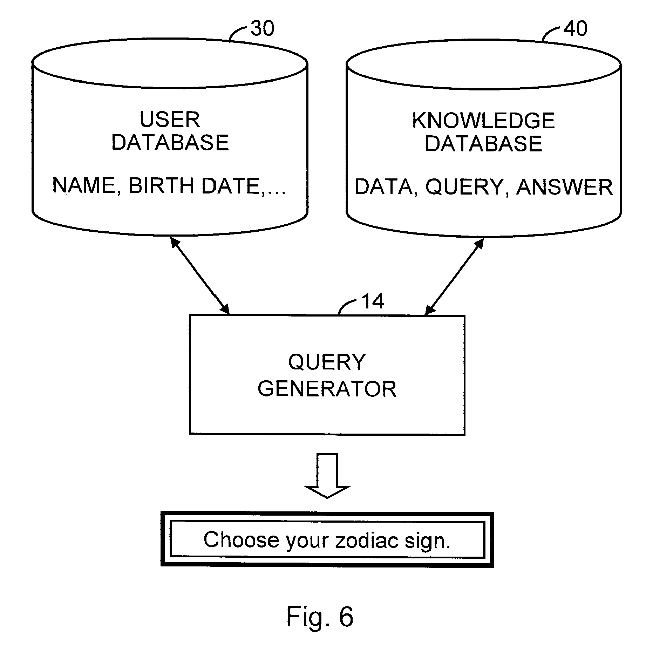

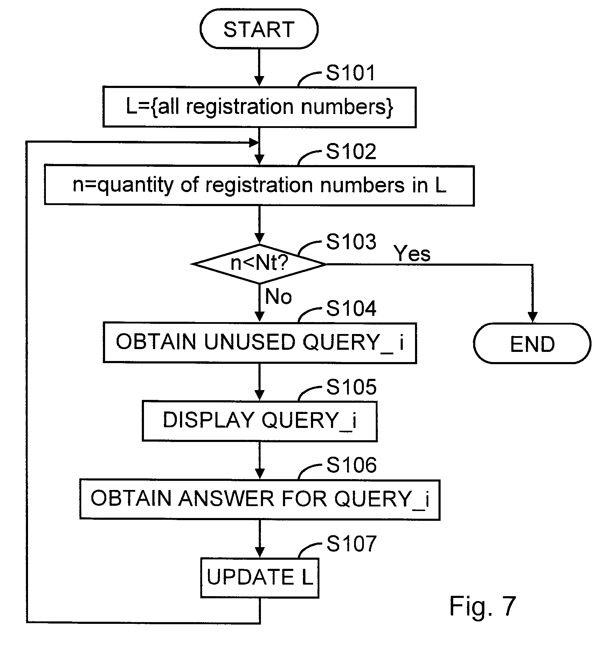

The query generator 14 generates a query for screening the candidates for identification. Fig. 6 is a diagram illustrating a general idea of a process of a query generator of a personal identification system according to a first embodiment of the present invention. As shown in Fig. 6, the query generator 14 generates a query on the basis of the knowledge data stored in knowledge database 40 then issues the generated query. The query generator 14 screens candidates for identification on the basis of user data stored in the user database 30 in accordance with the answer to the query (screening process will be discussed later in details with reference to Fig. 7). Specifically, the query generator 14 sequentially generates queries for predefined screening, e.g., reducing the quantity of screened candidates to not more than ten, and displays the queries on the display unit 11. Then, the query generator 14 generates a list L of screened candidates in accordance with an answer from the user to each query.

When sufficient screening is not accomplished after all the queries registered in the knowledge database 40 have been exhausted, the query generator 14 starts process for the biometric identification even the matching process may take a long time.

In such a case, the query generator 14 may issue a warning to the system management terminal 20, and prompts a system manager to update the knowledge database 40 or the biometric identification engine 16. Alternatively, a new query may be generated on the basis of a part of the registered personal data. For example, the user may be requested to answer the last one digit of his/her telephone number.

After the user is identified through the biometric identification, a query relating to the personal data may be made again. That is, although the user is identified as a result of the biometric identification, information that the identified person should obviously know, e.g., his/her zodiac sign, is not correctly answered, there is a strong possibility of some illegal operation.

The biometric identification controller 15 performs the process for biometric identification after screening the candidates for identification. Specifically, the biometric identification controller 15 prompts the user to enter biometric data used for biometric identification when the query generator 14 has ended the screening process, thereby obtaining the biometric data from the biometric identification sensor 13.

Subsequently, the biometric identification controller 15 sequentially picks up a user number from the list L screened by the query generator 14, and requests the biometric identification engine 16 to match the registered biometric data corresponding to the user number with the currently entered biometric data.

The biometric identification controller 15 receives degrees of similarity as the matching results from the biometric identification engine 16, and determines the user number having the highest degree of similarity. When the highest degree of similarity is lower than a predefined threshold, it is determined that there is no corresponding user and an error message is displayed.

Herein, the predefined threshold may be varied depending on a number nL of candidates for identification in the list L obtained by final screening. When the quantity of candidates for identification remaining in the list L is larger, the false acceptance rate is higher. On the other hand, when the quantity of candidates for identification remaining in the list L is smaller, the false acceptance rate is lower. Thus, a table of thresholds is set in advance in which a threshold for the degree of similarity is defined as threshold=F(nL) for each number nL of candidates for identification remaining in the list L. When the highest degree of similarity is higher than the predefined threshold, the library book checkout process is executed for the corresponding user number.

The biometric identification controller 15 determines a targeted reduced number Nt indicating the maximum quantity of screened candidates for the biometric identification. Specifically, the biometric identification controller 15 determines the targeted reduced number Nt in accordance with the "process time" necessary for processing the biometric data corresponding to one candidate and the "false acceptance rate" indicating the probability for erroneously identifying with data of another person. The biometric identification controller 15 then notifies the query generator 14 of the targeted reduced number Nt.

Herein, a discussion will be given of the "process time" and the "false acceptance rate" as conditions for determining the targeted reduced number Nt. The "process time" means the time required for processing biometric data of one candidate, and is determined depending on processing capacity of a biometric identification engine or hardware. If the time required for processing one candidate is t (sec), the process time is generally (N*t) (sec) as a result of N repetitions of the matching process.

On the other hand, it is required that the matching process is to be ended within a time period T (sec) because of reasons related to the system operation. Under this condition, the quantity of screened candidates needs to be reduced to not more than N1=(T/t). Incidentally, when the engine for biometric identification is greatly fast or the quantity of registered users is low, the screening may not be performed. In this case, the process for entering the biometric data and the matching process can be immediately performed.

The "false acceptance rate" means the probability for erroneously identifying with data of another person. If the false acceptance rate in one-to-one matching is r, and the quantity of candidates as matching targets is N, the false acceptance rate is approximately (N*r). Since the matching process is performed N times, the probability of accidentally matching with data of either candidate increases in proportion to N.

Generally, a false acceptance rate R allowable for the system is designed in advance. In order to set the false acceptance rate for the system to be R or less, the candidates for matching needs to be screened so that the quantity of candidates for matching is reduced to not more than "N2=R/r".

As discussed above, the biometric identification controller 15 determines the targeted reduced number Nt of the system on the basis of the two conditions; the "process time" and the "false acceptance rate". For example, the biometric identification controller 15 calculates N1 and N2 and determines a smaller one of N1 and N2 as the targeted reduced number Nt, in the process for determining the targeted reduced number Nt.

The numerical data (t and r discussed above) may be stored in the biometric identification engine 16 to be picked up as values by the biometric identification controller 15. Alternatively, the values may be manually set via the system management terminal 20 with reference to a specification of the biometric identification engine 16. Further, the calculation of targeted reduced number Nt may be performed by the system management terminal 20 and notified to the biometric identification controller 15 instead of performed by the biometric identification controller 15. Alternatively, the system manager may directly enter the targeted reduced number Nt via the system management terminal 20.

The biometric identification engine 16 performs the matching process between the registered biometric data and the biometric data entered for identification. Specifically, on receiving a request from the biometric identification controller 15, the biometric identification engine 16 matches biometric data so as to calculate the degree of similarity indicating how much both data are similar to each other, and notifies the biometric identification controller 15 of the degree of similarity.

### [Process by personal identification system]

Fig. 7 is a diagram illustrating a flowchart of a screening process performed in a personal identification system according to a first embodiment of the present invention. A discussion will be given of the screening process performed in the personal identification system 1 according to the first embodiment.

In operation S101, the query generator 14 in the library book checkout terminal 10 initializes a list L. The list L is for storing a result of the current screening. In the initial state, the list L stores registration numbers of all users registered. The registration number is a number assigned to each of the registered users.

In operation S102, the query generator 14 obtains a quantity n of the registration numbers (i.e., the quantity of candidates for identification) included in the list L.

In operation S103, the query generator 14 determines whether or not the quantity n of the registration numbers included in the list L is smaller than the targeted reduced number Nt.

When it is determined that the quantity n of the registration numbers is smaller than targeted reduced number Nt (operation S103: Yes), the screening process ends at the time. The query generator 14 performs the process for biometric identification against data corresponding to registration numbers included in the list L. When the initial quantity n of registration numbers is smaller than targeted reduced number Nt, the condition is met without the screening process, and the user may immediately execute the process for biometric identification.

In operation S104, when it is determined that the quantity n of the registration numbers is not smaller than targeted reduced number Nt (operation S103: No), the query generator 14 accesses the knowledge database 40 and obtains a query_i (a query of number i), that has not been used in the current screening process from among the registered queries. When there are a plurality of queries that have not been used, the query generator 14 may use the queries sequentially or at random.

In operation S105, the query generator 14 displays the query on the display unit 11.

In operation S106, the query generator 14 obtains an answer for the query_i from the user via the input unit 12.

In operation S107, the query generator 14 updates the list L on the basis of the answer from the user and "answers" data in the knowledge database 40. Specifically, the query generator 14 deletes, from the list L, a user number of a user having no attribute data derived from the answer for the current query. Thereafter, the process returns to operation S102 whereupon the process is repeated until the quantity n of candidates for identification included in the list L is not more than the predefined targeted reduced number Nt.

### [Advantages of the First Embodiment]

As discussed above, the personal identification system 1 according to the first embodiment of the present invention generates a query about personal data (birth date, address, affiliation, etc.) on the basis of knowledge data stored in the knowledge database 40 and allows the user to answer the query, instead of directly entering the personal data itself. Thus, the burden of the user is reduced and the risk of disclosure of the personal data to a third party is suppressed which may reduce the psychological resistance of the user.

It is sufficient for the user to answer a few queries required through the screening process, thereby reducing the troublesomeness as compared with that in the case of entering all personal data. For example, with a user interface for selecting a zodiac sign through a touch panel, the user may just view and select his/her zodiac sign on the display screen, thereby reducing the troublesomeness of the entry operation as compared with direct entry of the birth date, etc.

The personal identification system 1 may improve security by requesting an answer to a query generated on the system side. In the system requiring direct entry of personal data, the third party may easily enter the personal data obtained in any way. However, the immediate answer to a query based on the knowledge data is not so easy. For example, the Chinese zodiac or the zodiac sign of another person may not be correctly answered. The reliability is not completely secured because these data may be obtained by taking time. However, it is advantageous to some degree in terms of deterrence.

Further, in the personal identification system 1, after the user is identified through the biometric identification, a query relating to the personal data may be made again. That is, in such a method, although the user is identified as a result of the biometric identification, information that the identified person should obviously know, e.g., his/her zodiac sign, is not correctly answered, there is a strong possibility of some illegal operation.

Further, in the personal identification system 1, the burden of the user can be reduced as compared with the method using the favorite "sign". Because, the user may just answer the queries for screening the registered data, that are generated by the query generator 14 and may not remember any new information.

### [Second embodiment]

In the first embodiment, a library book checkout system is discussed as an example of applying a screening process for biometric identification. However, the present invention is not limited to this. As another example of applying the screening process for biometric identification, a discussion will be given of a case of adding the process according to the present invention supplementarily to an existing entry control system for an office. The existing entry control system includes a system using an employee card in combination with a password and a system using direct entry of employee ID in combination with the biometric identification.

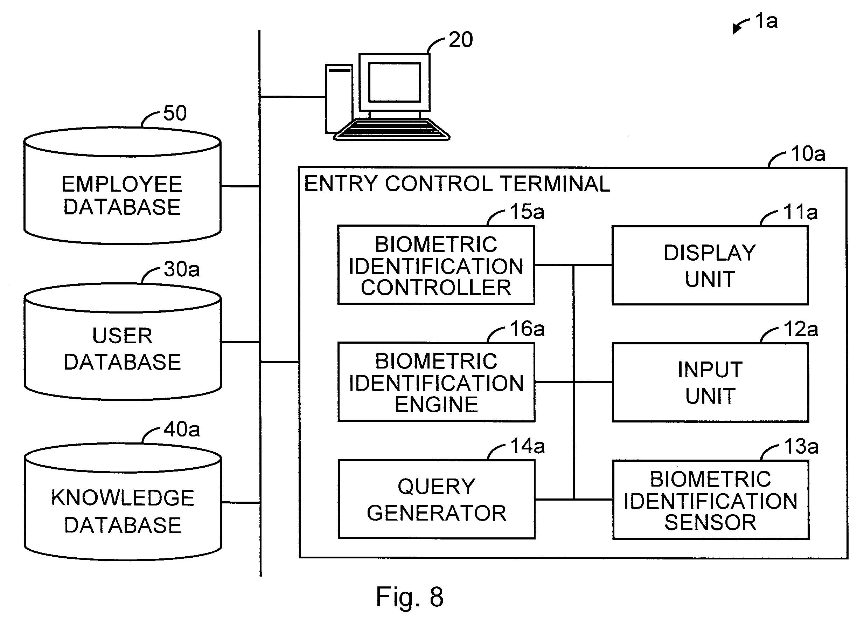

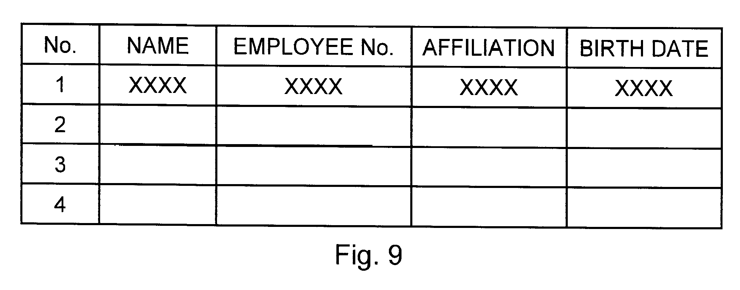

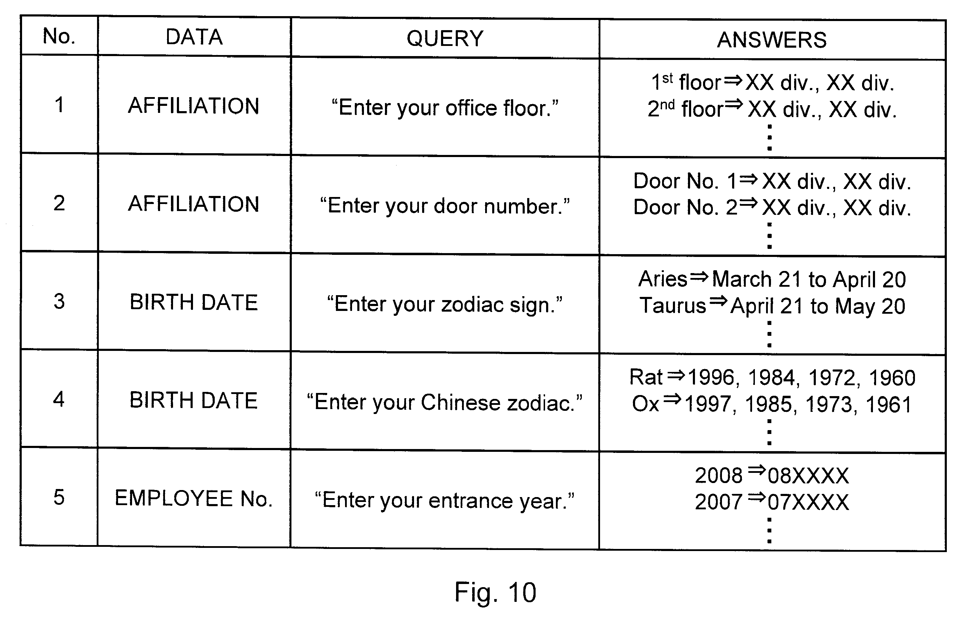

Fig. 8 is a block diagram illustrating a system configuration of a personal identification system according to a second embodiment of the present invention. Fig. 9 is a diagram illustrating an example of an employee database according to a second embodiment of the present invention. Fig. 10 is a diagram illustrating an example of a knowledge database according to a second embodiment of the present invention. In the second embodiment, a discussion will be given of a system configuration of a personal identification system 1 a as a case of applying the present invention to an existing entry control system with reference to Figs. 8 to 10.

As shown in Fig. 8, the personal identification system 1 a includes an entry control terminal 10a, a system management terminal 20, a user database 30a, and a knowledge database 40a. The personal identification system 1 a according to the second embodiment further include an employee database 50 for storing data relating to the employee, unlike the personal identification system 1 according to the first embodiment. The employee database 50 and a user database 30a are included in the existing entry control system, and a knowledge database 40a is added supplementarily in applying the present invention.

As shown in Fig. 8, the entry control terminal 10a includes a display unit 11a, an input unit 12a, a biometric identification sensor 13a, a query generator 14a, a biometric identification controller 15a, and a biometric identification engine 16a.

A discussion will be given of examples of the employee database 50 and the knowledge database 40a in the personal identification system 1a with reference to Figs. 9 and 10. As shown in Fig. 9, an employee number is registered to the employee database 50. For example, the employee number may be assigned under a rule that the two first-digits of the employee number indicate the fiscal year of entrance (year the employee started with the employer). In such a case, since the fiscal year of entrance can be calculated from the registered employee number, a query for the fiscal year of entrance may be made, thereby enabling the screening process.

As shown in Fig. 10, the knowledge database 40a stores, unlike the first embodiment, queries for the floor or door number of the office in association with the registered affiliation data, as an example of an office.

The query generator 14a may sequentially select queries with higher screening effect when selecting queries from the knowledge database 40a. For example, when there are only three floors, the screening is performed quicker by selecting the zodiac sign relating to the birth date, instead of selecting the floor.

Therefore, when there are a plurality of queries, the query generator 14a may calculate an expected quantity of screened candidates for every query and preferentially select a query with the highest screening effect. Alternatively, a priority may be set to each query in the knowledge database 40a, and the query generator 14a may select a query in accordance with the priority.

The query generator 14a may not only make a query using a character string such as "What floor is your office on?" but also ask the user to select a photograph of the door of his/her office, for example, as a query. The color of the floor, a photograph of the door, scenery viewed from the office, etc. are information that is obviously known to the employee. Thus, the photographs thereof may be provided for the selection.

The knowledge database 40a may be arbitrarily updated via the system management terminal 20 when the affiliation data, for example, is changed. Since new affiliation data and related information may not yet be grasped by the user, an entry of previous affiliation data may be temporarily permitted for a predefined time period just after the change of affiliation.

Since the query generator 14a allows the user to answer a query based on the knowledge data, security may be improved by making a query about, for example, the floor and direction (e.g., on the south side) of the office, that are not generally known but should be obviously known by the genuine user. Although the security is not complete, unlike a password, this is advantageous as a deterrent to illegal access.

Further, the query generator 14a may further make another query after the user is identified through the biometric identification. That is, although the user is identified as a result of the biometric identification, if information that the identified person should obviously know is not correctly answered, there is a strong possibility of some illegal operation. In such a case, an image shot by a monitoring camera may be recorded to be checked, or an alarm message may be displayed on the system management terminal 20.

### [Third embodiment]

The present invention may be applied to confirmation when entering personal data on an Internet site. For example, knowledge data may be used when entering personal data on issuance of user ID to a user on a membership site.

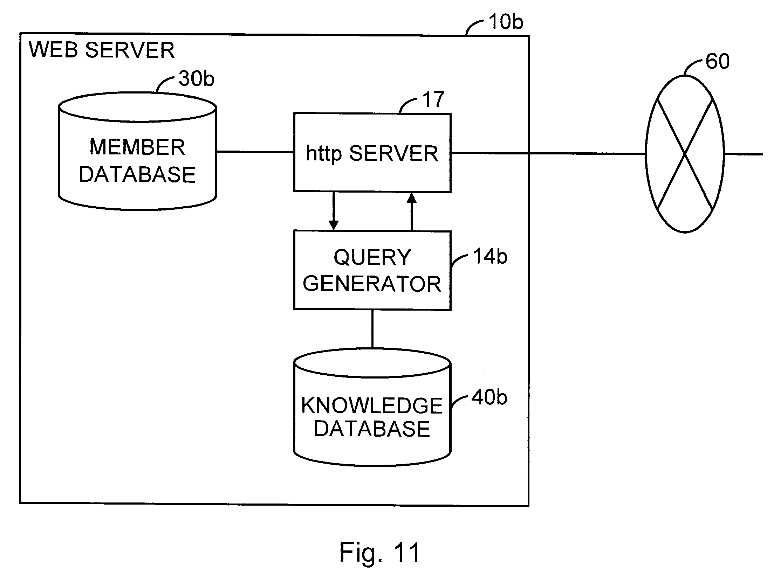

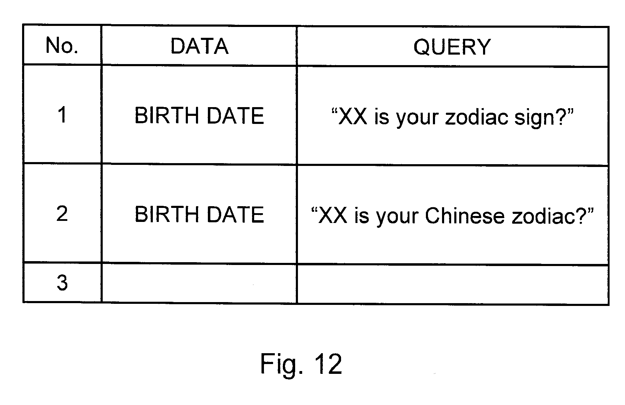

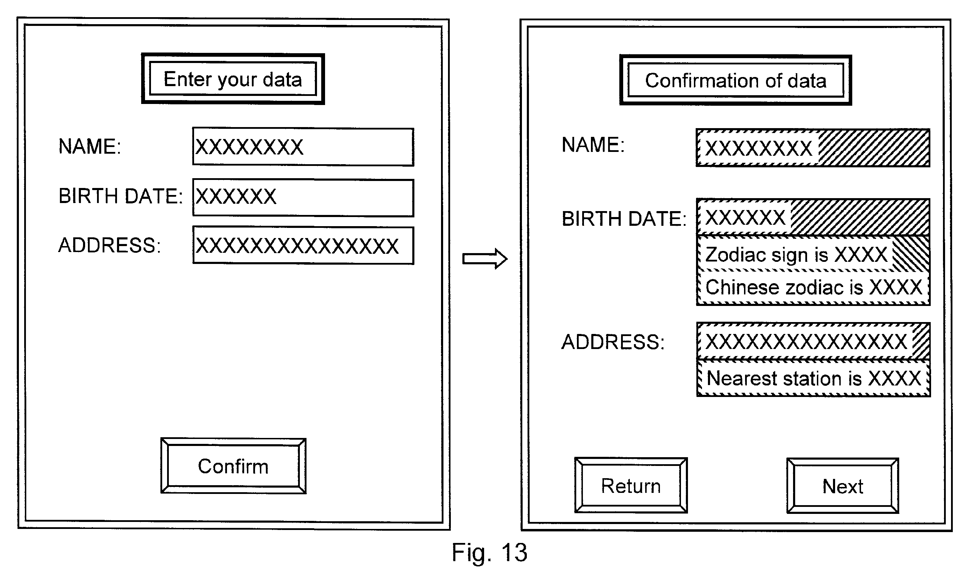

Fig. 11 is a block diagram illustrating a system configuration of a personal identification system according to a third embodiment of the present invention. Fig. 12 is a diagram illustrating an example of a knowledge database according to a third embodiment of the present invention. Fig. 13 is a diagram illustrating an example of display screen for data confirmation according to a third embodiment of the present invention. In the third embodiment, a discussion will be given of a case of using knowledge data for confirmation when entering personal data on issuance of user ID to a user on a membership site with reference to Figs. 11 to 13.

As shown in Fig. 11, a Web server 10b is connected to the Internet 60 and includes a query generator 14b, an http server 17, a member database 30b, and the knowledge database 40b. Hereinafter, a discussion will be given of portions different from those according to the first embodiment.

As shown in Fig. 12, the knowledge database 40b stores queries for checking whether the entered data is correct. For example, the knowledge database 40b stores, for checking a birth date entered, queries for confirming a zodiac sign or Chinese zodiac corresponding to the birth date.

As shown in Fig. 13, the http server 17 displays a form for entering name, birth date, and address on registration of personal data, and allows a user to enter his/her data. After the user has entered the data, the http server 17 advances to a confirmation phase upon the user pressing the "Confirm" button.

Then, the query generator 14b generates a confirmation query on the basis of the personal data entered by the user and the knowledge data stored in the knowledge database 40b. For example, the query generator 14b retrieves a zodiac sign and a Chinese zodiac on the basis of the birth date, and the nearest station on the basis of the address, thereby confirming the entered data by displaying the retrieved data as shown in Fig. 13.

As discussed above, a confirmation query is made with different data from the entered data by generating the query on the basis of the personal data entered by the user and the knowledge data stored in the knowledge database 40. Therefore, the user may easily find an error.

### [Other Embodiments]

The present invention may be embodied in various forms in addition to the embodiments discussed above. Hereinafter, other embodiments will be discussed.

### (1) Query example

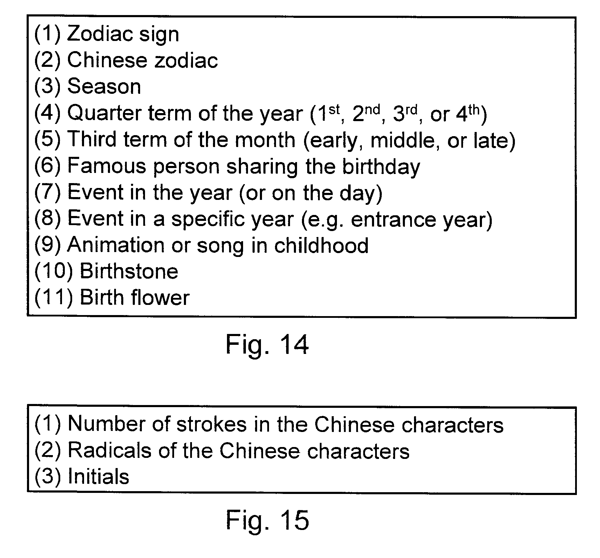

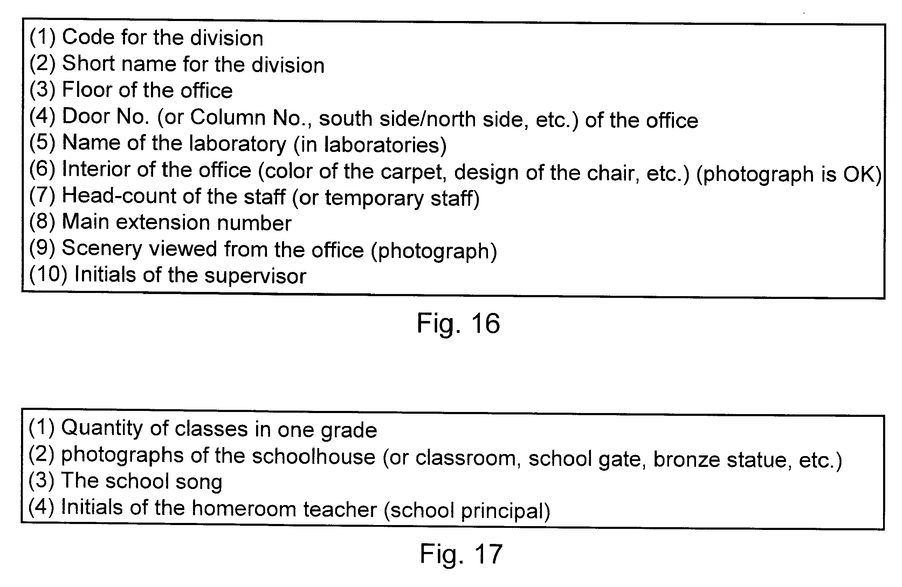

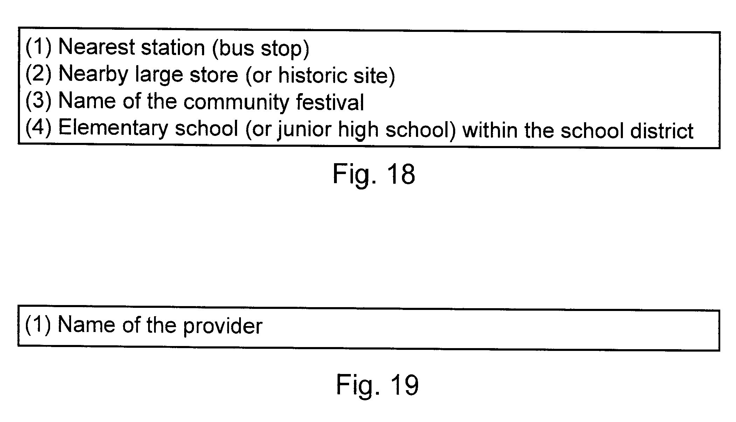

Fig. 14 is a diagram illustrating examples of a query generated in association with a birth date according to an embodiment of the present invention. Fig. 15 is a diagram illustrating examples of a query generated in association with a name according to an embodiment of the present invention. Fig. 16 is a diagram illustrating examples of a query generated in association with an affiliation according to an embodiment of the present invention. Fig. 17 is a diagram illustrating examples of a query generated in association with a school according to an embodiment of the present invention. Fig. 18 is a diagram illustrating examples of a query generated in association with an address according to an embodiment of the present invention. Fig. 19 is a diagram illustrating an example of a query generated in association with an email address according to an embodiment of the present invention.

According to the embodiments of the present invention, queries shown in Figs. 14 to 19 may be generated on the basis of the knowledge data. Specifically, as shown in Figs. 14 to 19, candidates for identification may be screened by generating a query about the birth date, a query about the name, a query about affiliation, a query about a school, a query about the address, and a query about their email address.

### (2) System configuration

The components in the apparatuses shown in the drawings are functionally conceptual ones, and may not be configured physically as shown in the drawings. That is, the forms of the dispersion and unifying of the devices are not limited to those shown in the drawings. All the components or a part thereof may be functionally or physically dispersed or unified in an arbitrary unit. For example, the display unit 11 and the input unit 12 may be unified. Further, all the process functions performed by the apparatuses or a part thereof are realized by a CPU in accordance with a program interpreted and executed by the CPU, and alternatively may be realized as hardware using wired logic.

In addition, all or a part of automatically performed processes among the processes discussed with the embodiments may be manually performed. Alternatively, all or a part of the manual process discussed above may be automatically performed by a well-known method. In addition, the process sequence, control sequence, specific name, and information including various data and parameters shown in the specification or drawings may be arbitrarily changed unless otherwise specified.

### (3) Program

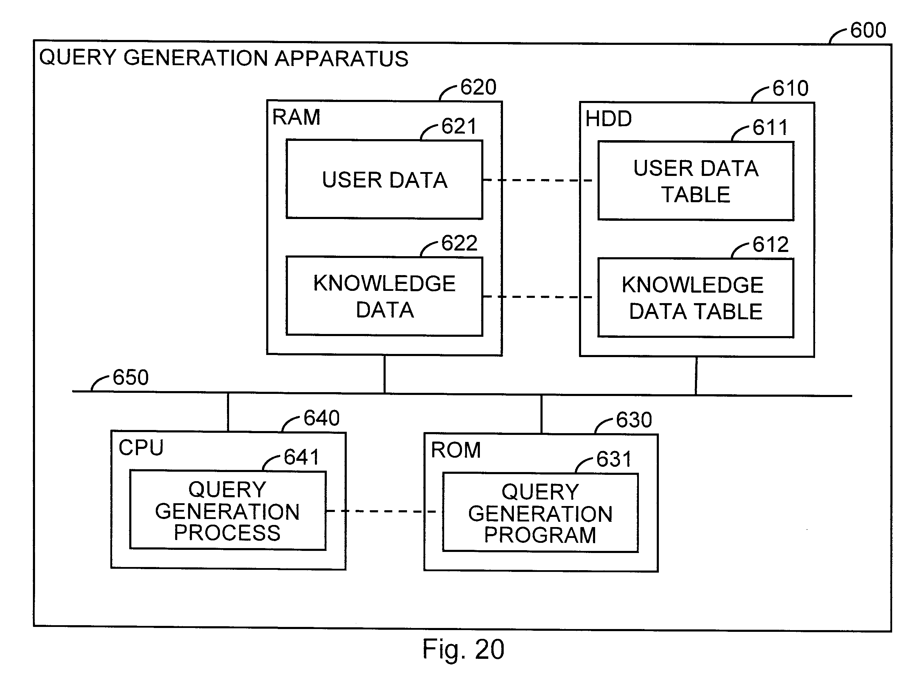

Various processes discussed above may be realized by executing a prepared program with a computer. Fig. 20 is a diagram illustrating a computer that executes a query generation program for personal identification according to an embodiment of the present invention. Hereinafter, a discussion will be given of an example of a computer that executes a program having the same functions as those according to the above discussed embodiments of the present invention with reference to Fig. 20.

As shown in Fig. 20, a computer 600 as a query generation apparatus includes an HDD (hard disk drive) 610, a RAM (random access memory) 620, a ROM (read only memory) 630, and a CPU (central processing unit) 640, which are connected to each other via a bus 650.

The ROM 630 pre-stores, as shown in Fig. 20, a query generation program 631 for a personal identification, which exerts the same functions as a query generator according to the embodiments of the present invention. The query generation program 631 may be arbitrarily unified or be dispersed, similarly to the components in the personal identification system 1 shown in Fig. 1.

The CPU 640 reads the query generation program 631 from the ROM 630 and executes the query generation program 631 to function as a query generation process 641 as shown in Fig. 20. The query generation process 641 corresponds to the query generator 14 shown in Fig. 1.

As shown in Fig. 20, the HDD 610 stores a user data table 611 and a knowledge data table 612. The user data table 611 and the knowledge data table 612 correspond to the user database 30 and the knowledge database 40 shown in Fig. 1, respectively. The CPU 640 registers user data 621 and knowledge data 622 in the user data table 611 and knowledge data table 612, reads the user data 621 and knowledge data 622 from the user data table 611 and knowledge data table 612, stores the read data in the RAM 620, and executes query generation process 641 on the basis of the user data 621 and knowledge data 622 stored in the RAM 620.

## Claims

1. A personal identification system for identifying a user, comprising:
a personal data storage for storing personal data of users;
a knowledge data storage for storing knowledge data related to the personal data stored in the personal data storage;
a query generator for generating a query on the basis of the knowledge data stored in the knowledge data storage;
an interrogator for issuing the query generated by the query generator to the user and obtaining an answer to the query from the user; and
a candidate screener for screening candidates for identification in accordance with the answer.

2. The personal identification system of claim 1, further comprising:
an identifier for performing an identification process of identifying the user when a quantity of the candidates is less than a predefined quantity after the candidate screener has screened the candidates.

3. The personal identification system of claim 2, further comprising:
a screening status notifier for notifying the user of a status of screening candidates; and
a start instruction acceptor for accepting an instruction from the user to start the identification process,
wherein
said identifier starts the identification process upon the start instruction acceptor accepting the instruction.

4. The personal identification system of any preceding claim, further comprising:
a personal data acceptor for accepting personal data entered by the user,
wherein
said candidate screener also screens the candidates for identification in accordance with the personal data entered by the user.

5. The personal identification system of any preceding claim, further comprising:
a skip instruction acceptor for accepting an instruction from the user to skip the query,
wherein
said interrogator issues another query generated by the query generator to the user upon the skip instruction acceptor accepting the instruction.

6. A method executed by a computer for identifying a user, comprising:
storing personal data of users;
storing knowledge data related to the stored personal data;
generating a query on the basis of the stored knowledge data;
issuing the generated query to the user;
obtaining an answer to the query from the use; and
screening candidates for identification in accordance with the answer.

7. A program which, when executed by a computer, causes the computer to provide the personal identification system according to any of claims 1 to 5.

8. A computer-readable medium on which is recorded the program according to claim 7.
